# EUROPÄISCHE PATENTSCHRIFT

(11) **EP 2 338 280 B1**
(45) Veröffentlichungstag und Bekanntmachung des Hinweises auf die Patenterteilung: **06.03.2013**
(21) Anmeldenummer: 09782823.0
(22) Anmeldetag: 09.09.2009
(51) Int. Cl.: H04N 7/18, B60R 11/00

(54) **MODULARE BILDERFASSUNGSEINHEIT**
MODULAR IMAGE DETECTION UNIT
ENSEMBLE MODULAIRE D ACQUISITION D'IMAGES

(30) Priorität: 09.09.2008 DE 102008046453
(43) Veröffentlichungstag der Anmeldung: 29.06.2011
(73) Patentinhaber: Huf Hülsbeck & Fürst GmbH & Co. KG, 42551 Velbert (DE)
(72) Erfinder: KAMPS, Rolf, 8200 Schaffhausen (CH); MÜLLER, Ulrich, 42549 Velbert (DE)
(74) Vertreter: Bals, Rüdiger
(86) Internationale Anmeldenummer: PCT/EP2009/061697
(87) Internationale Veröffentlichungsnummer: WO 2010/029109

(56) Entgegenhaltungen:
- DE-A1-102004 039 450
- DE-A1-102005 021 672
- DE-U1-202004 014 825
- JP-A- 8 150 875
- JP-A- 56 099 835
- JP-A- 2008 016 407
- US-A- 5 619 036

## Beschreibung

Die vorliegende Erfindung betrifft ein Bilderfassungssystem mit einer Kameraeinheit, die zur Bilderfassung des Außenbereiches eines Kraftfahrzeuges dient gemäß dem Oberbegriff von Anspruch 1. Derartige Bilderfassungssysteme weisen ein Schutzelement auf, welches über einen Mechanismus, insbesondere einen Schwenkmechanismus mittels eines Antriebes von einer Schließstellung in eine Offenstellung bewegbar ist, wobei sich in der Schließstellung des Schutzelementes zumindest eine Linse der Kameraeinheit von außen unzugänglich hinter dem Schutzelement befindet, und in der Offenstellung zumindest die Linse der Kameraeinheit des Schutzelementes zur Bilderfassung freigegeben ist.

Derartige Bilderfassungssysteme, die zur die zur Bilderfassung eines Außenbereiches des Kraftfahrzeuges dienen, sind allgemein bekannt. Beispielsweise können derartige Bilderfassungssyteme im Bereich des assistierenden Einparkens von Kraftfahrzeugen zum Einsatz kommen. Die Kameraeinheiten erzeugen für den Fahrer des Kraftfahrzeuges ein Bild des Außenbereiches, insbesondere der Rückansicht des Kraftfahrzeuges, welches auf einem Monitor innerhalb des Kraftfahrzeuges abgebildet wird und eine wesentliche Unterstützung für den Fahrer beim Rangieren darstellt. Es ist bekannt, derartige Systeme mit einer Kameraeinheit an diversen Fahrzeugstellen anzubringen, wie zum Beispiel an einem Stoßfänger, an einer Heckklappe oder dergleichen.

Aus der Druckschrift EP 1 648 737 B1 ist ein Kamerasystem für ein Kraftfahrzeug bekannt, bei dem die Kameraeinheit durch ein Schutzelement verschließbar ist, um diese somit vor äußeren Umwelteinflüssen beim Nichtgebrauch zu schützen. Sofern die Kameraeinheit zum Einsatz kommt, wird das Schutzelement weggeschwenkt, so dass nunmehr die Kameraeinheit die gewünschten Bilder erfassen kann. Zu diesem Zweck ist das gesamte Bilderfassungssystem mit einem Elektromotor ausgestattet, der über ein Zahnradgetriebe direkt auf das Schutzelement wirkt, um dieses von einer Schließstellung in eine Offenstellung zu überführen. Die gesamte Baueinheit des Bilderfassungssytems erfordert viel Platz, weshalb dieses System nicht an platzkritischen Stellen am oder im Kraftfahrzeug angeordnet werden kann. JP08150875 A beschreibt ein Bilderfassungssystem gemäß den oberbegriff des Patentanspruchs 1.

Es ist daher Aufgabe der vorliegenden Erfindung, ein Bilderfassungssystem der vorgenannten Art zu entwickeln, welches auch an platzkritischen Stellen angeordnet werden kann und folglich einen geringen Platzbedarf aufweist. Trotzdem soll die Linse der Kameraeinheit durch ein Schutzelement schützbar sein.

Zur Lösung dieser Aufgabe wird ein Bilderfassungssystem mit den technischen Merkmalen des Anspruches 1, insbesondere mit denen aus dem kennzeichnenden Teil vorgeschlagen, denen nachfolgende besondere Bedeutung zukommt.

Das erfindungsgemäße Bilderfassungssystem weist zumindest zwei Module auf, wobei in einem ersten Modul wenigstens die Kameraeinheit mit dem Mechanismus und dem Schutzelement angeordnet ist. In einem zweiten Modul ist der Antrieb baulich getrennt von dem ersten Modul vorgesehen, wobei das erste und das zweite Modul durch zumindest ein Betätigungselement mechanisch miteinander verbunden sind, so dass der Antrieb über das Betätigungselement den Mechanismus für das Schutzelement antreibt. Durch die bauliche Trennung des Bilderfassungssystems in zwei Module kann somit nur das erste Modul an einer platzkritischen Stelle angeordnet werden, welches im Verhältnis zum zweiten Modul wesentlich kleiner ausgestaltet ist. Das erste Modul dient dann mit der Kameraeinheit zur Bilderfassung, wohingegen das zweite Modul die mechanische Ansteuerung des ersten Moduls über das Betätigungselement vornimmt. Dieses zweite Modul, was aufgrund des Antriebes, der in der Regel aus einem Elektromotor besteht, deutlich größer ausgestaltet ist, kann dahingehend an eine Stelle verlagert werden, an der ausreichend Platz vorhanden ist. Über das erwähnte Betätigungselement ist dann zumindest die mechanische Ansteuerung des Schutzelementes möglich. Das Schutzelement selbst wird über den erwähnten Mechanismus, der z. B. als Schwenk- oder Drehmechanismus ausgestaltet sein kann, betätigt.

In den abhängigen Unteransprüchen sind zweckmäßige Ausgestaltungen des erfindungsgemäßen Bilderfassungssystems aufgeführt.

Bei einer ersten Ausführungsform ist die Kameraeinheit unbeweglich, das heißt starr in dem ersten Modul angeordnet. Somit kann nur das Betätigungselement die Betätigung des Schutzelementes von der Offenstellung in die Schließstellung und umgekehrt steuern bzw. bewirken. Dabei ist es ebenfalls denkbar, dass ein zweites Betätigungselement, z. B. baugleiches Betätigungselement, zum Einsatz kommt, so dass das erste Betätigungselement beispielsweise nur für den Öffnungsvorgang von der Schließstellung in die Offenstellung vorgesehen ist und das zweite Betätigungselement für die Schließvorgang von der Öffnungsstellung in die Schließstellung vorgesehen ist.

Dabei kann der erforderliche Antrieb der Betätigungselemente durch einen Antrieb oder mehrere Antriebe erzeugt werden. Üblicherweise dient als Antrieb ein Elektromotor, der als Stellmotor ausgestellt sein kann. Ebenfall kann zwischen dem Antrieb und dem Betätigungselement ein Getriebe angeordnet werden.

Bei einem weiteren Ausführungsbeispiel ist es denkbar, dass die Kameraeinheit beweglich in dem ersten Modul gelagert ist, wobei das Betätigungselement auch zu einem Stellungswechsel der Kameraeinheit (und nicht nur dem Schutzelement) von einer Ruhestellung in eine Aufzeichnungsstellung dient. Bei diesem zweiten Ausführungsbeispiel ist es denkbar, dass das auch die Aufnahmerichtung der Kameraeinheit veränderbar bzw. steuerbar ist. Hierzu kann es vorgesehen sein, dass die Kameraeinheit beweglich in dem ersten Modul gelagert ist, wobei das erste Betätigungselement das Schutzelement betätigt und das zweite Betätigungselement zu einem Stellungswechsel der Kameraeinheit von einer Ruhestellung in eine Aufzeichnungsstellung dient. Ebenfalls kann mit dem zweiten Betätigungselement auch die Aufnahmerichtung der Kameraeinheit gesteuert werden. Dabei ist es auch denkbar, dass ein drittes Betätigungselement vorgesehen ist, um die Aufnahmerichtung nicht nur in einer Dimension, sondern auch in einer zweiten Dimension vorzunehmen. Mit anderen Worten, die Kamera kann zum Beispiel nicht nur hoch und runter, sondern auch links- und rechtsseitig durch die jeweiligen Betätigungselemente verschwenkt werden. Auch ist es denkbar, dass die Kameraeinheit durch nur ein Betätigungselement auf einer Kreisbahn um eine zentrale Aufnahmeachse drehbar gelagert ist, um somit einen größtmöglichen Aufzeichnungsbereich zu erhalten.

Ebenfalls kann es vorgesehen sein, dass nur ein Betätigungselement zwischen dem ersten und zweiten Modul vorgesehen ist, wobei das Betätigungselement das Schutzelement von seiner Schließstellung in seine Offenstellung überführt und eine Aufnahmerichtung der beweglichen Kameraeinheit durch das gleiche Betätigungselement steuerbar ist. Hierzu kann zunächst die vom Antrieb erzeugte Bewegung des Betätigungselementes dazu benutzt werden, das Schutzelement zu öffnen, um anschließend die Weiterbewegung des Betätigungselementes für eine Steuerung der Aufnahmerichtung der beweglichen Kameraeinheit zu nutzen. Auch ist es denkbar, dass das Betätigungselement gleichzeitig das Schutzelement und auch die Kameraeinheit betätigt, so dass nicht nur das Schutzelement und anschließend die Kameraeinheit von dem Betätigungselement gesteuert wird.

Ferner ist es denkbar, dass der Mechanismus für das Schutzelement auch zur Aufnahme und Lagerung der beweglichen Kameraeinheit dient. Somit kann das Schutzelement gleichzeitig mit der Kameraeinheit bewegt werden. Ebenfalls kann die Kameraeinheit aber auch über einen zusätzlichen Mechanismus in dem ersten Modul gelagert sein, so dass eine getrennte Bewegung des Schutzelementes von der beweglichen Kameraeinheit möglich ist. Auch ist es denkbar, dass die unterschiedlichen Mechanismen für das Schutzelement und die bewegliche Kameraeinheit miteinander gekoppelt sind, um somit gezielte Bewegungsabläufe zu realisieren.

Des Weiteren kann es optional vorgesehen sein, dass das Schutzelement und/oder die bewegliche Kameraeinheit derart federbelastet sind, dass durch die Federkraft das Schutzelement von seiner Offenstellung in seine Schließstellung bzw. die Kameraeinheit von der Aufzeichnungsstellung in die Ruhestellung überführbar ist. Die erwähnte Federkraft kann durch ein oder mehrere Federelemente bereitgestellt werden, wobei das Betätigungselement zumindest teilweise gegen das Federelement anarbeitet, um z. B. das Schutzelement oder die bewegliche Kameraeinheit zu steuern. Hierdurch ist es jedoch möglich, dass eine automatische Rückführung des Schutzelementes von seiner Offenstellung in die Schließstellung möglich ist, ohne dass das Betätigungselement hierfür angetrieben werden muss. Vielmehr sorgt die Federkraft für die erforderliche Rückstellkraft des Schutzelementes. Selbstverständlich kann auch die gleiche Federkraft oder eine Federkraft von einem weiteren Federelement dazu dienen, die bewegliche Kameraeinheit selbstständig zurückzustellen. Diese Rückstellung erfolgt zweckmäßigerweise von der Aufzeichnungsstellung in die Ruhestellung. Selbstverständlich ist aber auch eine umgekehrte Rückstellung denkbar. Sofern nur ein Betätigungselement vorgesehen ist, um das Schutzelement und die Kameraeinheit zu betätigen, reicht auch ein Federelement aus, um die Rückstellung selbstständig vorzunehmen.

Ebenfalls ist es denkbar, dass der Mechanismus zur Betätigung des Schutzelementes ein Kniehebelmechanismus aufweist, wodurch das Schutzelement in der Schließstellung von Außen nicht betätigbar ist, so dass dieses in der Schließstellung blockiert ist. Somit ist es nur möglich, das Schutzelement gewaltsam aus der Schließstellung zu entfernen. Durch den angesprochenen Kniehebelmechanismus ist keine Sperre oder dergleichen notwendig, um das Schutzelement in der Schließstellung zu sichern. Vielmehr wirkt der Kniehebelmechanismus selbsthemmend. Die Kameraeinheit kann durch einen zusätzlichen oder den gleichen Kniehebelmechanismus in der Ruhestellung gesichert werden.

Das erfindungsgemäße Bilderfassungssystem kann ein Betätigungselement aufweisen, welches als ein Bowdenzug, eine Schub- und/oder Drehstange, ein Getriebe, ein Zahnriemen oder Kette oder dergleichen ausgestaltet ist. Hierbei ist es von Vorteil, wenn das Betätigungselement flexibel ausgestaltet ist, um somit eine beliebige Anordnung der beiden Module zueinander zu erreichen. Folglich können für unterschiedliche Kraftfahrzeugmodelle die gleichen Module und Betätigungselemente eingesetzt werden, wobei nur die Anordnung des flexiblen Betätigungselementes an die jeweilige Einbausituation angepasst werden muss. Dabei empfiehlt es sich, das Betätigungselement über Klipsverbindungen mit dem Kraftfahrzeug zu verbinden. Um klappernde Geräusche während der Fahrt zu vermeiden, kann das Betätigungselement selbst in Schaumstoffpuffern oder Schaumstoffrollen gelagert sein. Diese Schaumstoffpuffer verhindern auch ein Durchscheuern des Betätigungselementes bei möglichen Kontaktstellen zum Kraftfahrzeug.

Ebenfalls ist es denkbar, dass das Schutzelement einteilig als Deckel oder Klappe ausgestaltet ist, wobei der Deckel oder die Klappe bogenförmig oder eben geformt sein können. Ebenfalls kann optional ein mehrteiliges Schutzelement vorgesehen sein, welches einen Lamellen- oder Zentralverschluss aufweist. Auch ist es denkbar, dass ein mehrteiliger Rollladenverschluss zum Einsatz kommt, womit das Schutzelement auch bogenförmig über die Linse der Kameraeinheit geführt werden kann. Zu diesem Zweck kann das Schutzelement in einer schlitzartigen Führung vor der Linse der Kameraeinheit gelagert sein. Die schlitzartige Führung kann selbst linear, bogenförmig oder andersartig ausgeführt sein. Gerade bei einem Rollladenverschluss ist somit eine optimale Anordnung des Schutzelementes an die Linse der Kameraeinheit erreichbar, so dass das Schutzelement nahe aber kontaktlos vor der Linse der Kameraeinheit angeordnet ist. Zusätzlich kann an der Innenseite des Schutzelementes ein Reinigungselement in Form einer Reinigungslippe, einem Mikrovlies oder dergleichen vorgesehen sein, womit das Schutzelement beim Öffnen oder Schließen die Linse der Kameraeinheit reinigt. Zu diesem Zweck kann auch ein Schlauch zu dem ersten Modul geführt werden, der ein Reinigungsfluid bereitstellt, um ein Zerkratzen der Linse beim Reinigungsvorgang zu vermeiden.

Des Weiteren kann das Schutzelement durch den Mechanismus mittels einer translatorischen und/oder rotatorischen Bewegung von seiner Offenstellung in seine Schließstellung und umgekehrt überführt werden, wobei insbesondere der Bewegungsablauf in verschiedene Phasen unterteilbar ist, die sich durch ihre Bewegungsart unterscheiden. So kann beispielsweise ein zweiphasiger Bewegungsablauf stattfinden, wobei bei einer ersten Bewegungsphase das Schutzelement von der Linse der Kameraeinheit entfernt wird und in einer zweiten Bewegungsphase das Schutzelement weggeschwenkt oder -gedreht wird. Ebenfalls ist eine Kombination der unterschiedlichen Bewegungsarten denkbar für das Schutzelement. Bei einem mehrteiligen Schutzelement können die einzelnen Teile des Schutzelementes auch von oben oder unten oder seitlich über die Linse geführt werden.

Erfindungsgemäß kann ein deutlicher Abstand zwischen dem ersten und dem zweiten Modul vorgesehen sein, wobei der Abstand größer als 5 cm, bevorzugt größer als 10 cm und besonders bevorzugt größer als 20 cm ist. Hierdurch lässt sich das erste Modul selbst an sehr platzkritischen Stellen am Kraftfahrzeug platzieren, wohingegen das zweite Modul weit entfernt an einer Stelle im Kraftfahrzeug angeordnet ist, die ausreichend Platz bietet. Von dem ersten Modul führen nur eine elektrische Leitung und das Betätigungselement weg. In der Regel ist hierfür ausreichend Platz, so dass durch die Erfindung nunmehr das Bilderfassungssystem noch an die bisher unzugänglichen Stellen im Kraftfahrzeug angeordnet werden kann. Hierbei ist insbesondere die Anordnung des Bilderfassungssystemes im Bereich des hinteren Nummernschildes besonders zweckmäßig, um dem Fahrer die Bildinformationen bei dem Rückwärtsfahren zu übermitteln.

Zusätzlich kann es vorgesehen sein, dass neben der Kameraeinheit ein Bedienelement und/oder ein mechanischer Schließzylinder angeordnet ist, welcher ebenfalls mit dem Schutzelement in der Schließstellung von Außen geschützt untergebracht sind, wobei es sich bei dem Bedienelement insbesondere um ein elektrisches Schaltelement, wie zum Beispiel ein Taster, Schalter, Piezoelement oder dergleichen handelt. Somit kann zum Beispiel das Bedienelement für die Zentralverriegelung beim Kraftfahrzeug an der Heckklappe durch das Schutzelement vor äußerer Verschmutzung geschützt werden, so dass der Bediener selbst bei einem schmutzigen Kraftfahrzeug die Hände bei der Betätigung des Heckklappenschalters, der aus dem Bedienelement besteht, saubere Hände behält. Zusätzlich kann es vorgesehen sein, dass an dem ersten Modul ein Näherungssensor oder ein weiterer Sensor vorgesehen ist. Der Näherungssensor kann insbesondere dazu dienen, die Annäherung einer Person oder eines Gegenstandes zu detektieren. Und ist es möglich, dass das Schutzelement nur in die Offenstellung überführt wird, falls eine Person versucht, das Bedienelement für die Zentralverriegelung unter der Schutzklappe zu betätigen. Ansonsten wird das Schutzelement nur dann automatisch von der Schließstellung in die Offenstellung überführt, wenn die Kameraeinheit zur Bilderfassung genutzt wird. Zusätzlich ist es denkbar, dass die Zentralverriegelung auch über das zweite Modul des Bilderfassungssystems die Steuerung des Schutzelementes vornimmt. Beispielsweise kann das Schutzelement dann in die Offenstellung gebracht werden, wenn sich der Fahrer des Kraftfahrzeuges kontaktlos durch einen ID-Geber identifiziert hat. Nach einem gewissen Zeitintervall kann dann die Zentralverriegelung dafür sorgen, falls das Bedienelement neben der Kameraeinheit nicht benutzt worden ist, dass die Schutzklappe wieder in die Schließstellung verfährt.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:

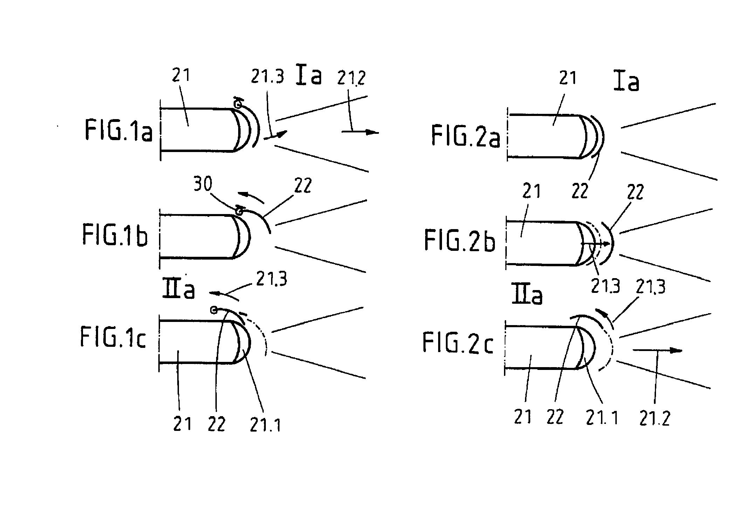

- Fig. 1 a: eine rein schematische Ansicht des ersten Moduls des Bilderfassungssystems mit einer Kameraeinheit und einem Schutzelement in der Schließstellung Ia,
- Fig. 1b: das Bilderfassungssystem gemäß Fig. 1a, wobei das Schutzelement sich von der Kameraeinheit gelöst hat,
- Fig. 1 c: die Bilderfassungssystem gemäß Fig. 1a, wobei sich das Schutzelement in der Offenstellung IIa befindet,
- Fig. 2a: vergleichbare Darstellung zu Figur 1a mit einer weiteren Ausführungsform des Bilderfassungssystems, das sich wieder in der Schließstellung befindet,
- Fig. 2b: das Bilderfassungssystem gemäß Fig. 2a, wobei das Schutzelement sich von der Kameraeinheit entfernt hat,
- Fig. 2c: das Bilderfassungssystem gemäß Fig. 2a, wobei das Schutzelement sich in der Offenstellung IIa befindet,
- Fig. 3: schematische Darstellung des erfindungsgemäßen Bilderfassungssystems, wobei das erste Modul mit dem zweiten Modul über ein Gestänge als Betätigungselement bedient wird,
- Fig. 4: vergleichbare Darstellung eines weiteren Ausführungsbeispiels zur Fig. 3, wobei jedoch das erste und zweite Modul über einen Bowdenzug als Betätigungselement verbunden sind und das erste Modul zusätzlich ein Bedienelement aufweist und
- Fig. 5: Querschnitt durch das erste Modul aus Figur 4.

In den Figuren 1a bis 1c ist eine Kameraeinheit 21 mit einem Schutzelement 22 dargestellt. Die Kameraeinheit 21 dient zur Bilderfassung des Außenbereiches eines Kraftfahrzeuges, wobei das Schutzelement 22 von einer Schließstellung Ia, die in Figur 1a dargestellt ist, in eine Offenstellung IIa gemäß Fig. 1c bewegbar ist. In der Schließstellung la befindet sich die Kameraeinheit 21 von außen unzugänglich hinter dem Schutzelement 22. Die Kameraeinheit 21 ist an der Fahrzeugkarosserie innerhalb des ersten Moduls 20 oder an dem ersten Modul 20 befestigt (nicht dargestellt), wobei die Kameraeinheit 21 in eine Aufnahmerichtung 21.2 ausgerichtet ist. In der Offenstellung IIa des Schutzelementes 22 ist eine Bilderfassung der Kameraeinheit 21 durchführbar. Während der Bewegung von der Schließstellung la in die Offenstellung IIa (kurz Öffnungsvorgang genannt) führt das Schutzelement 22 eine zweiphasige Bewegung aus. Eine erste Bewegungsphase zeichnet sich durch eine Schwenkbewegung des Schutzelementes 22 um eine erste Achse 30 aus. Bei dieser ersten Bewegungsphase entfernt sich das Schutzelement 22 von der Kameraeinheit 21 und bewegt sich im Wesentlichen in Aufnahmerichtung 21.2. Durch diese erste Bewegungsphase wird zunächst ein größerer Abstand zwischen dem Schutzelement 22 und der Kameraeinheit 21 geschaffen. In einer daran anschließenden zweiten Bewegungsphase wird das Schutzelement 22 samt der ersten Achse 30 von dem Vorderbereich der Kameraeinheit 21, insbesondere der Linse 21.1 wegbewegt. Die Kameraeinheit 21 kann beispielsweise an einem in diesen Figur 1 nicht dargestellten Gehäuse 27 befestigt sein, wobei in der zweiten Bewegungsphase (s. Fig. 1b und c)) das Schutzelement 22 in das Gehäuse 27 bewegt wird, so dass in der Offenstellung IIa gemäß Fig. 1c das Schutzelement 22 vollständig und für den Benutzer nicht sichtbar sich innerhalb des Gehäuses befindlich ist.

In den Figuren 2a bis 2c ist eine weitere Ausführungsvariante des ersten Moduls 20 des erfindungsgemäßen Bilderfassungssystems 10 dargestellt, bei der die erste Bewegungsphase sich durch eine rein translatorische Bewegung des Schutzelementes 22 in Richtung der Aufnahmerichtung 21.2 kennzeichnet (s. Fig. 2b). Ausgehend von der Schließstellung la gemäß Figur 2a erfolgt über einen nicht dargestellten Antrieb 41 der in einem zweiten Modul 40 angeordnet ist, eine translatorische Bewegung des Schutzelementes 22, wodurch sich der Abstand des Schutzelementes 22 zur Kameraeinheit 21, insbesondere der Linse 21.1 vergrößert. Anschließend wird über die zweite Bewegungsphase, die in Figur 2c dargestellt ist, das Schutzelement 22 aus dem Vorderbereich der Kameraeinheit 21 wegbewegt.

Bezüglich der zuvor beschriebenen Ausführungsbeispiele gemäß den Figuren 1 und 2 kann die zweite Bewegungsphase auch eine rein translatorische Bewegung sein. Ebenfalls ist es denkbar, dass die zweite Bewegungsphase dadurch realisiert wird, dass das Schutzelement 22 wie eine "Schiebetür" vor der Kameraeinheit 21 verfährt, um der Kameraeinheit 21 eine genügend große Sicht für die Bilderfassung zur Verfügung zu stellen. Beispielsweise kann ausgehend von der Figur 2b das Schutzelement 22 in Richtung der Zeichenebene schiebetürartig, senkrecht zur Bewegungsrichtung der ersten Bewegungsphase bewegt werden.

Der besondere Vorteil dieser zweiphasigen Bewegung ist darin zu sehen, dass die Kameraeinheit 21, insbesondere die Linse 21.1, während des Öffnungs- und Schließvorganges schonend behandelt wird, da die Bewegung des Schutzelementes 22 im Wesentlichen berührungslos zur Kameraeinheit 21 erfolgt. Gemäß den Figuren 1 und 2 kann selbstverständlich das Schutzelement 22 in seiner Schließstellung la unmittelbar auf der Kameraeinheit 21 aufliegen. Während der ersten Bewegungsphase hebt gemäß Figur 1 und Figur 2 das Schutzelement 22 schonend, ohne Kratzer auf der Linse 21.1 der Kameraeinheit 21 zu verursachen bis zu einem bestimmten Abstand ab, bevor es in der zweiten Bewegungsphase in Richtung der Offenstellung IIa des Schutzelementes 22 verfahren wird. Das Schutzelement 22 kann gemäß der Ausführungsformen aus Figur 1 und Figur 2 auf seiner Innenseite, die der Kameraeinheit 21 zugewandt ist, mit einer Dichtung oder einem Reinigungselement ausgeführt sein, die in Schließstellung la des Schutzelement 22 unmittelbar auf der Kameraeinheit 21, insbesondere der Linse 21.2, aufliegt. Die erwähnte Dichtung schützt die Kameraeinheit 21 vor Feuchtigkeit, Schmutz ect. in der Schließstellung la.

Sofern das Schutzelement 22 in einer ersten Bewegungsphase parallel zur Oberfläche der Linse 21.1 verfahren wird, ist es denkbar, das Schutzelement 22 mit einem Reinigungselement zu versehen, womit die Linse 21.1 beim Öffnungs- und Schließvorgang gereinigt wird. Zusätzlich kann ein Reinigungsfluid welches flüssig oder gasförmig ist, den Reinigungsprozess unterstützen. Dieses Reinigungsfluid kann über einen Schlauch kurz vor die Linse 21.1 geleitet werden, wo es dann austritt.

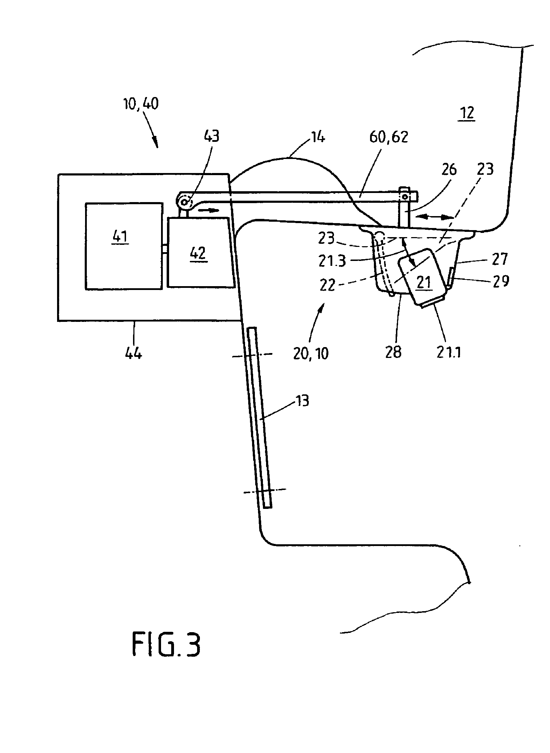

In der Figur 3 ist eine schematische Schnittdarstellung des gesamten Bilderfassungssystems dargestellt. Dabei wird deutlich, dass dieses Bilderfassungssystem aus zwei Modulen 20, 40, nämlich einem ersten Modul 20 und dem zweiten Modul 40 besteht, die über ein Betätigungselement 60 miteinander in Wirkverbindung stehen.

Wie aus der Figur 3 zu erkennen ist, ist das erste Modul 20 in einer Vertiefung für ein Nummernschild 13 in einer Heckklappe 12 bei einem Kraftfahrzeug angeordnet. Dabei ist zur besseren Darstellung die Vertiefung sehr groß dargestellt, um somit auch das erste Modul besser darstellen zu können. In der Regel ist in diesem Bereich der Heckklappe 12 wenig Platz, da auch noch die Nummernschildbeleuchtung und auch das Heckklappenschloss sowie das Bedienelement 25 für die Heckklappe 12 vorgesehen ist. Um trotzdem die Kameraeinheit 21, insbesondere die Linse 21.1 des Bilderfassungssystems 10 vor äußeren Einflüssen, wie zum Beispiel Schmutz, Regenwasser oder dergleichen zu schützen, ist es vorgesehen, ein Schutzelement 22 vor die Linse 21.1 vorfahren zu können. Für die dafür erforderliche Bewegung des Schutzelementes 22 ist ein Antrieb 41 notwendig, der entsprechenden Platzbedarf benötigt. Häufig ist im Bereich des Heckklappe 12 dieser Platz nicht gegeben. Ebenfalls kann das Bilderfassungssystem 10 auch in anderen Bereichen im Kraftfahrzeug vorgesehen sein, wo auch der Platzbedarf stark eingeschränkt ist. Aus diesem Grund ist es vorgesehen, die Antriebseinheit für das Schutzelement 22 baulich von der Kameraeinheit 21 zu trennen. Zu diesem Zweck ist das zweite Modul 40 vorgesehen, welches den Antrieb 41, der insbesondere aus einem E-Motor besteht, aufweist. Zusätzlich kann ein Getriebe 42 vorgesehen sein, was über ein Anschlusselement 43 auf ein Betätigungselement 60 wirkt. Das gesamte zweite Modul 40 kann in einem Gehäuse 44 innerhalb der Heckklappe 12 angeordnet sein, wobei es jedoch einen deutlichen Abstand zu dem ersten Modul 20 aufweisen kann. Somit ist man konstruktiv nicht an einer Nähe des ersten Moduls 20 zum zweiten Modul 40 gebunden. Sowohl das erste Modul 20 als auch das zweite Modul 40 können über Befestigungselemente 11 mit der Heckklappe 12 verbunden werden. Diese Befestigungselemente 11 können aus Rast- und Gegenrastmitteln bestehen. Hierbei kann es sich um Schrauben handeln, die mit Gegengewinnen zusammenwirken. Auch kann es sich um Klipsverbinder handeln, die mit entsprechenden Gegenelementen zusammenwirken. Zwischen dem ersten Modul und der Heckklappe 12 kann zusätzlich eine Dichtung vorgesehen sein, so dass auch kein Regenwasser in das Innere der Heckklappe 12 eindringt.

In der Figur 3 umfasst das erste Modul 20 die Kamera 21, die beweglich in einem Mechanismus 23 gelagert ist. Dieser Mechanismus 23 dient einerseits zur Lagerung des Schutzelementes 22 und andererseits zur beweglich Lagerung der Kameraeinheit 21, die in der Bewegungsrichtung 22 bewegbar ist. In der Schließstellung la ist die gesamte Kameraeinheit 21 in dem Gehäuse 27 des ersten Modules 20 angeordnet. Dabei wird die Öffnung 28 des Gehäuses 27 von dem Schutzelement 22 verdeckt. Der Mechanismus 23 sorgt dafür, dass zunächst das Schutzelement 22 von der Schließstellung la in die Offenstellung IIa überführt wird. Hierzu ist der Mechanismus 23 mit einem Anschlusselement 26 ausgestattet, der hebelartig aus der hinteren Seite des ersten Modules 20 herausragt. Dieses Anschlusselement 26 ist horizontal verschiebbar, wodurch der Mechanismus 23 betätigbar ist. Auch ist es denkbar, dass das Anschlusselement 26 klapp- oder schwenkbar in dem ersten Modul 20 angeordnet ist und mit dem Mechanismus 23 zusammenwirkt. Die Betätigung des Anschlusselementes 26 des ersten Modules 20 findet über das Betätigungselement 60 statt, welches ebenfalls mit dem zweiten Modul 40 in mechanischer Wirkverbindung steht. Im vorliegenden Fall ist das Betätigungselement 60 als eine Druck- und Zugstange 62 ausgestaltet. Das Betätigungselement 60 ist mit dem Anschlusselement 43 im zweiten Modul 40 verbunden. Dieses Anschlusselement 43 wird von dem Getriebe 42 ebenfalls horizontal verschoben. Das Getriebe 42 wird selbst über den Antrieb 41 angetrieben. Ebenfalls ist es denkbar, dass auch der Antrieb 41 direkt auf das Betätigungselement 60 wirkt. Sowohl das Anschlusselement 26 als auch das Anschlusselement 43 kann gelenkig mit dem stangenartigen Betätigungselement verbunden sein. Nachdem nun die Schutzklappe 22 durch den Mechanismus 23 mittels des Betätigungselementes 60 geöffnet worden ist, wird auch die bewegliche Kameraeinheit 21 aus einer Ruhestellung IIb in die Aufzeichnungsstellung Ib in ihre Bewegungsrichtung 21.3 verfahren. Der Schließvorgang für das erste Modul 20 findet umgekehrt statt, in dem zunächst die Kameraeinheit 21 in der entgegengesetzten Bewegungsrichtung 21.3 verfahren wird, damit anschließend das Schutzelement 22 zu seiner Offenstellung IIa in die Schließstellung la wechseln kann.

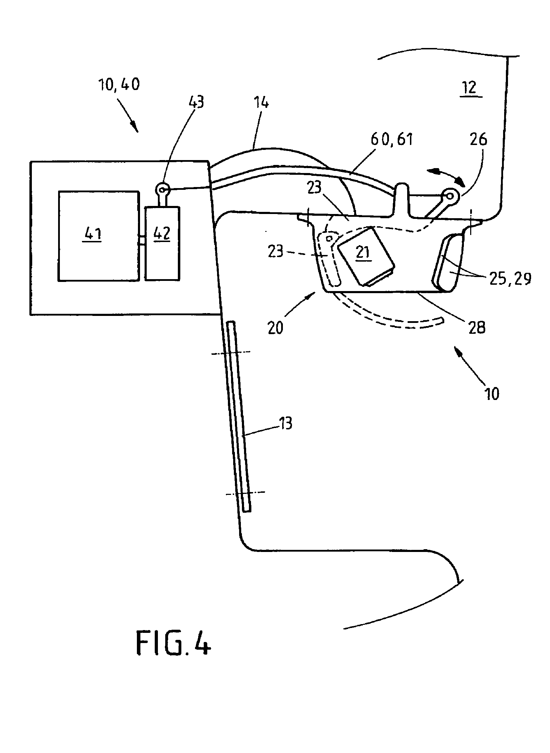

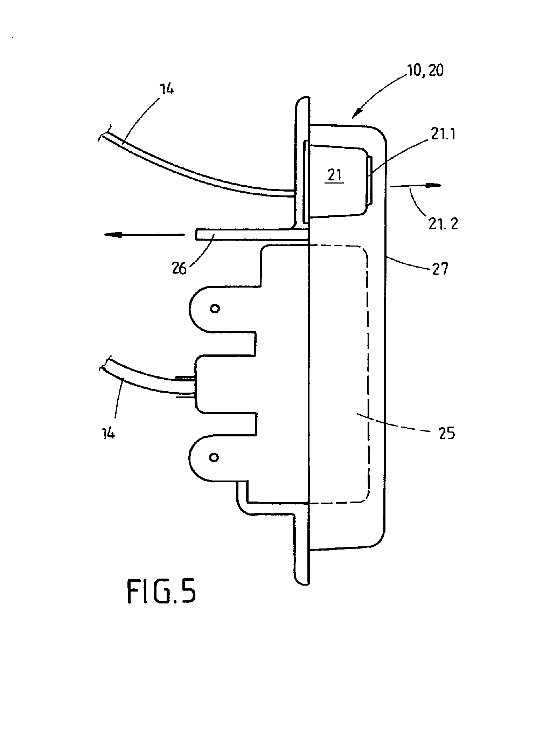

In der Figur 4 ist eine weitere Variante des erfindungsgemäßen Bilderfassungssystems 10 gezeigt. Hierbei umfasst das erste Modul 20 nicht nur die Kameraeinheit 21, sondern zusätzlich auch ein Bedienelement 25, womit sich die Heckklappe 12 öffnen lässt. Sowohl die Kameraeinheit 21 als auch das Bedienelement 25 werden in der Schließstellung la von dem Schutzelement 22 gegen äußere Umwelteinflüsse geschützt. Wie sich aus der weiteren Figur 5 ergibt, die einen Querschnitt durch das erste Modul aus der Figur 4 darstellt, sind die Kameraeinheit 21 und das Bedienelement 25 seitlich nebeneinander angeordnet. Das von Kameraeinheit 21 erhaltene Bildsignal wird über eine elektrische Verbindung 14 aus dem ersten Modul 20 an das Kraftfahrzeug weitergeleitet. Dort kann das Bildsignal auf einem Monitor im Inneren des Kraftfahrzeuges für den Fahrer sichtbar gemacht werden.

In der Figur 4 ist die Kameraeinheit 21 fest, das heißt unbeweglich in dem ersten Modul 20 angeordnet. Folglich bedient der angedeutete Mechanismus 23 nur das Schutzelement 22. Dieser Mechanismus 23 wird über das hebelartige Anschlusselement 26 betätigt. An dieses hebelartige Anschlusselement 26 greift das Ende Bowdenzuges 61 an, der als Betätigungselement 60 dient. Mit dem anderen Ende führt der Bowdenzug 61 in das zweite Modul 40, wo der Bowdenzug 61 an dem Anschlusselement 43 befestigt ist. Der Bowdenzug 61 kann selbst einen Verstellmechanismus aufweisen, womit die Länge des Bowdenzugs 61 einstellbar ist. Hierdurch ist auch eine Justierung möglich. In den dargestellten Figuren 3 und 4 ist nicht das Federelement dargestellt, welches für die Rückstellkraft des Schutzelementes 22 und/oder der Kamera 21 dient. Wie zuvor in der Beschreibung erwähnt worden ist, können auch mehrere Federelemente zum Einsatz kommen, die für eine selbstständige Rückstellung der Kameraeinheit 21 und des Schutzelementes 22.

Aus der Figur 5 wird ersichtlich, dass die Kameraeinheit 21 neben dem Bedienelement 25 innerhalb des ersten Moduls 20 angeordnet ist. Sowohl von der Kameraeinheit 21 als auch von dem Bedienelement 25 führen elektrische Verbindungen 14 zum Kraftfahrzeug. Die Betätigung des Schutzelementes 22 findet über das hebelartige Anschlusselement 26 statt, welches nach links hin betätigbar ist. Zwischen diesem Anschlusselement 26 und dem Mechanismus 23 kann ein Kniehebelmechanismus angeordnet sein, damit das Schutzelement 22 mit der Schließstellung la nicht von Außen so ohne weiteres zu öffnen ist. Nur durch ein gewaltsames und zerstörerisches Öffnen kann die selbsthemmende Wirkung des Kniehebelmechanismus überwunden werden. Zusätzlich kann ein Näherungssensor 29, wie in Fig. 3 gezeigt, sowie weitere Sensoren oder elektrische Schaltelemente an oder in dem ersten Modul 20 angeordnet sein. Der Näherungssensor 29 kann als kapazitiver Sensor ausgestaltet sein

### Bezugszeichenliste

- 10: Bilderfassungssystem
- 11: Befestigungselement
- 12: Heckklappe
- 13: Nummerschild
- 14: Elektrische Verbindung / Kabel für 21, 25

- 20: erstes Modul
- 21: Kameraeinheit
- 21.1: Linse
- 21.2: Aufnahmerichtung
- 21.3: Bewegungsrichtung von 21
- 22: Schutzelement
- 22.1: bogenförmige Klappe / Deckel
- 22.2: Bewegungsrichtung von 22
- 23: Mechanismus
- 24: Führung
- 25: Bedienelement
- 26: Anschlusselement / Hebel für 60
- 27: Gehäuse
- 28: Öffnung in 27
- 29: Näherungssensor
- 30: erste Achse

- 40: Zweites Modul
- 41: Antrieb, insbesondere E-Motor
- 42: Getriebe
- 43: Anschlusselement für 60
- 44: Gehäuse

- 60: Betätigungselement
- 61: Bowdenzug
- 62: Druck-/ Zugstange

- la: Schließstellung
- IIa: Offenstellung

- Ib: Aufzeichnungsstellung
- IIb: Ruhestellung

## Patentansprüche

1. Bilderfassungssystem (10) mit einer Kameraeinheit (21), die zur Bilderfassung des Außenbereiches eines Kraftfahrzeuges dient, und einem Schutzelement (22), das über einen Mechanismus (23) mittels eines Antriebs (41) von einer Schlleßstellung (Ia) In eine Offenstellung (IIa) bewegbar ist, wobei
sich in der Schließstellung (Ia) des Schutzelementes (22) zumindest eine Linse (21.1) der Kameraeinheit (21) von außen unzugänglich hinter dem Schutzelement (22) befindet, und in der Offenstellung (IIa) zumindest die Linse (21.1) der Kemerseinheit (21) durch das Schutzelement (22) zur Bilderfassung freigegeben ist,
**dadurch gekennzeichnet,**
**dass** In einem ersten Modul (20) wenigstens die Kameraeinhelt(21) mit dem Mechanismus (23) und dem Schutzelement (22) angeordnet ist und in einem zweiten Modul (40) der Antrieb (41) baulich getrennt vom ersten Modul (20) vorgesehen ist, wobei das erste und das zweite Modul (20, 40) durch zumindest ein Betätigungselement (60) mechanisch miteinander verbunden sind, sodass der Antrieb (41) über das Betätigungselement (60) den Mechanismus (23) antreibt.

2. Bilderfassungssystem (10) nach Anspruch 1,
**dadurch gekennzeichnet,**
**dass** die Kameraeinheit (21) beweglich In dem ersten Modul (20) gelagert Ist, wobei das Betätigungselement (60) auch zu einem Stellungswechsel der Kameraeinheit (21) von einer Ruhestellung (IIb) In eine Aufzeichnungssetellung (Ib) dient.

3. Bilderfassungssystem (10) nach Anspruch 2,
**dadurch gekennzeichnet,**
**dass** die Kameraeinheit (21) beweglich in dem ersten Modul (20) gelagert ist, wobei ein erstes Betätigungselement (60) das Schutzelement (22) betätigt und ein zweites Betätigungselement (60), insbesondere baugleiches, zu einem Stellungswechsel der Kemeraeinheit (21) von einer Ruhestellung (IIb) In eine Aufzeichnungsstellung (Ib) dient.

4. Bilderfassungssystem (10) nach einem der vorhergehenden Ansprüche,
**dadurch gekennzeichnet,**
**dass** der Mechanismus (23) für das Schutzelement (22) auch zur Aufnahme und Lagerung der beweglichen Kameraeinheit (21) dient.

5. Bilderfassungssystem (10) nach einem der vorhergehenden Ansprüche,
**dadurch gekennzeichnet,**
**dass** das Betätigungselement (60) das Schutzelement (22) von seiner Schließstellung (Ia) In seine Offenstellung (IIa) überführt und eine Aufnahmerichtung (21.2) der beweglichen Kameraeinheit (21) durch das Betätigungselement (60) steuerbar ist.

6. Bilderfassungssystem (10) nach einem der vorhergehenden Ansprüche,
**dadurch gekennzeichnet,**
**dass** das erste Betätigungselement (60) das Schutzelement (22) betätigt und das zweite Betätgungselement (60) zu einem Stellungswechsel der Kameraeinheit (21) von einer Ruhestellung (IIb) In eine Aufzeichnungestellung (Ib) dient, wobei mit dem zweiten Betätigungselement (60) auch die Aufnahmerichtung (21.2) der Kameraeinheit (21) steuerbar ist,
wobei insbesondere ein drittes Betätigungselement (60) vorgesehen Ist, um die Aufnahmerichtung (21.2) nicht nur in einer Dimension, sondern auch in einer zweiten Dimension vorzunehmen.

7. Bilderfassungssystem (10) nach einem der vorhergehenden Ansprüche,
**dadurch gekennzeichnet,**
**dass** das Schutzelement (22) und/oder die bewegliche Kameraeinheit (21) derart federbelastet sind, dass durch die Federkraft das Schutzelement (22) von seiner Offenstellung (IIa) in seine Schließstellung (Ia) bzw. die Kameraeinheit (21) von ihrer Aufzelchnungsstellung (Ib) in die Ruhestellung (IIb) überführbar ist.

8. Bilderfassungssystem (10) nach einem der vorhergehenden Ansprüche,
**dadurch gekennzeichnet,**
**dass** der Mechanismus (23) zur Betätigung des Schutzelements (22) einen Kniehebelmechanismus aufweist, wodurch das Schutzelement (22) in der Schließstellung (Ia) von außen nicht betätigbar ist.

9. Bilderfassungssystem (10) nach einem der vorhergehenden Ansprüche,
**dadurch gekennzeichnet,**
**dass** das Betätigungselement (60) ein Bowdenzug (61), eine Schub-/- undloder Drehstange (62), ein Getriebe, einen Zahnriemen oder Kette oder dergleichen ist, wobei Insbesondere das Betätigungselement (60, 61) flexible ausgestaltet ist.

10. Bilderfassungssystem (10) nach einem der vorhergehenden Ansprüche,
**dadurch gekennzeichnet,**
**dass** das Schutzelement (22) einteilig als Deckel oder Klappe ausgestaltet ist bzw. dass das Schutzelement (22) mehrteilig, insbesondere als Lammellen-/ oder Zentralverschluss oder Rolledenverschluss ausgestaltet ist.

11. Bilderfassungssystem (10) nach einem der vorhergehenden Ansprüche,
**dadurch gekennzeichnet,**
**dass** das Schutzelement (22) in einer schlitzartigen Führung vor der Linse (21.1) der Kameraeinheit (21) gelagert ist.

12. Bilderfassungssystem (10) nach einem der vorhergehenden Ansprüche,
**dadurch gekennzeichnet,**
**dass** das Schutzelement (22) durch den Mechanismus (23) mittels einer translatorischen und/oder rotatorischen Bewegung von seiner Offenstellung (IIa) In seine Schließstellung (Ia) wechselt, wobei insbesondere der Bewegungsablauf In verschiedene Phasen untertellbar ist, die sich durch ihre Bewegungsart unterscheiden.

13. Bilderfassungssystem (10) nach einem der vorhergehenden Ansprüche,
**dadurch gekennzeichnet,**
**dass** das zweite Modul (40) in einem deutlichen Abstand von dem ersten Modul (20) angeordnet ist, wobei der Abstand größer als 5 Zentimeter, bevorzugt größer als 10 bzw. 20 Zentimeter ist.

14. Bilderfassungssystem (10) nach einem der vorhergehenden Ansprüche,
**dadurch gekennzeichnet,**
**dass** neben der Kameraeinheit (21) ein Bedienelement (25) und/oder ein mechanischer Schließzylinder angeordnet ist, welche ebenfalls mit dem Schutzelement (22) In der Schlierßstellung (Ia) von außen geschützt untergebracht sind, wobei es sich bei dem Bedienelement (25) Insbesondere um ein elektrisches Schaltelement, wie z. B, einen Taster, Schalter, Piezoelement oder dergleichen handelt.

15. Bilderfassungssystem (10) nach einem der vorhergehenden Ansprüche,
**dadurch gekennzeichnet,**
**dass** ein Näherungssensor (29) an oder im ersten Modul (20) vorgesehen ist, wodurch eine Annäherung von Personen und/oder Gegenständen detektierbar ist.

## Claims

1. Image acquisition system (10) with a camera unit (21) used for image acquisition of the outside area of the vehicle, and a protective element (22), which can be moved from a closed position (Ia) to an open position (IIa) via a mechanism (23) by means of a drive (41), in which
at least one lens (21.1) of the camera unit (21) is situated behind the protective element (22) inaccessible from the outside in the closed position (Ia) of the protective element (22), and
at least the lens (21.1) of camera unit (21) is released by the protective element (22) for image acquisition in the open position (IIa),
**characterized by** the fact
that at least the camera unit (21) with the mechanism (23) and the protective element (22) is arranged in a first module (20) and the drive (41) is provided in a second module (40) separated from the first module (20), the first and second modules (20, 40) being mechanically connected to each other through at least one activation element (60) so that the drive (41) drives the mechanism (23) via an activation element (60).

2. Image acquisition system (10) according to Claim 1,
**characterized by** the fact
that the camera unit (21) is mounted to move in the first module (20), the activation element (60) also serving for a position change of camera unit (21) from a rest position (IIb) to a recording position (Ib).

3. Image acquisition system (10) according to Claim 2,
**characterized by** the fact
that camera unit (21) is mounted to move in a first module (20), the first activation element (60) activating the protective element (22) and a second activation element (60), especially of the same construction, serving for a position change of the camera unit (21) from a rest position (IIb) to the recording position (Ib).

4. Image acquisition system (10) according to one of the preceding claims,
**characterized by** the fact
that the mechanism (23) for the protective element (22) also serves for accommodating and mounting the removing camera unit (21).

5. Image acquisition system (10) according to one of the preceding claims,
**characterized by** the fact
that the activation element (60) transfers the protective element (22) from its closed position (Ia) to its open position (IIa) and a recording direction (21.2) of the moving camera unit (21) can be controlled by the activation element (60).

6. Image acquisition system (10) according to one of the preceding claims,
**characterized by** the fact
that the first activation element (60) is operating the protective element (22) and that the second activation element (60) serves for the change of position of the camera unit (21) from a rest position (IIb) into a recording position (Ib), the recording direction (21.2) of the camera unit (21) can be activated by the second activation element (60),
particularly a third activation element (60) is provided in order to conduct the recording direction (21.2) not only in one dimension but also in a second dimension.

7. Image acquisition system (10) according to one of the preceding claims,
**characterized by** the fact
that the protective element (22) and/or the moving camera unit (21) are spring-loaded so that the protective element (22) can be transferred from its open position (IIa) to its closed position (Ia) and/or the camera unit (21) from its recording position (Ib) to the rest position (IIb) by the spring force.

8. Image acquisition system (10) according to one of the preceding claims,
**characterized by** the fact
that the mechanism (23) for activation of the protective element (22) has a toggle lever mechanism, so that the protective element (22) cannot be activated from the outside in the closed position (Ia).

9. Image acquisition system (10) according to one of the preceding claims,
**characterized by** the fact
that the activation element (60) is a Bowden cable (61), a pushrod and/or rotating rod (62), a gear mechanism, a toothed belt or chain or the like, in which the activation element (60, 61), in particular, is configured flexible.

10. Image acquisition system (10) according to one of the preceding claims,
**characterized by** the fact
that the protective element (22) is configured in one part as a cover or flap or the protective element (22) is configured in several parts, especially as a louver or central closure or shutter closure.

11. Image acquisition system (10) according to one of the preceding claims,
**characterized by** the fact
that the protective element (22) is mounted in a slit-like guide in front of the lens (21.1) of the camera unit (21).

12. Image acquisition system (10) according to one of the preceding claims,
**characterized by** the fact
that the protective element (22) changes from its open position (IIa) to its closed position (Ia) through the mechanism (23) by means of a translatory and/or rotatory movement, in which particularly the movement process can be divided into different phases that differ by the type of the movement.

13. Image acquisition system (10) according to one of the preceding claims,
**characterized by** the fact
that the second module (40) is arranged at a significant distance from the first module (20), the distance being greater than 5 centimeters, preferably greater than 10 or 20 centimeters.

14. Image acquisition system (10) according to one of the preceding claims,
**characterized by** the fact
that an operating element (25) and/or a mechanical lock cylinder is arranged next to camera unit (21), which are also accommodated protected from the outside with the protective element (22) in the closed position (Ia), the operating element (25) being especially an electrical switch element, like a button, switch, piezo element or the like.

15. Image acquisition system (10) according to one of the preceding claims,
**characterized by** the fact
that a proximity sensor (29) is provided on or in the first module (20) so that the approach of persons and/or objects is detectable.

## Revendications

1. Système d'acquisition d'images (10) comprenant une unité de caméra (21) qui sert à acquérir des images de l'environnement extérieur d'un véhicule automobile, et un élément de protection (22) qu'un mécanisme (23) peut déplacer, au moyen d'un entraînement (41), d'une position fermée (la) dans une position ouverte (IIa),
dans lequel, dans la position fermée (la) de l'élément de protection (22), au moins une lentille (21.1) de l'unité de caméra (21) se trouve derrière l'élément de protection (22) et est inaccessible de l'extérieur, et, dans la position ouverte (IIa), au moins la lentille (21.1) de l'unité de caméra (21) est libérée par l'élément de protection (22) pour l'acquisition d'images,
**caractérisé en ce**
**qu'**au moins l'unité de caméra (21) est disposée avec le mécanisme (23) et l'élément de protection (22) dans un premier module (20) et l'entraînement (41) est prévu dans un deuxième module (40) physiquement séparé du premier module (20), le premier et le deuxième module (20, 40) étant reliés entre eux mécaniquement par au moins un élément d'actionnement (60) de sorte que l'entraînement (41) entraîne le mécanisme (23) par l'intermédiaire de l'élément d'actionnement (60).

2. Système d'acquisition d'images (10) selon la revendication 1,
**caractérisé en ce**
**que** l'unité de caméra (21) est montée mobile dans le premier module (20), l'élément d'actionnement (60) servant aussi à un changement de position de l'unité de caméra (21) d'une position de repos (IIb) dans une position d'enregistrement (Ib).

3. Système d'acquisition d'images (10) selon la revendication 2,
**caractérisé en ce**
**que** l'unité de caméra (21) est montée mobile dans le premier module (20), un premier élément d'actionnement (60) actionnant l'élément de protection (22) et un deuxième élément d'actionnement (60), en particulier identique, servant à un changement de position de l'unité de caméra (21) d'une position de repos (IIb) dans une position d'enregistrement (Ib).

4. Système d'acquisition d'images (10) selon une des revendications précédentes,
**caractérisé en ce**
**que** le mécanisme (23) pour l'élément de protection (22) sert aussi à la réception et au montage de l'unité de caméra mobile (21).

5. Système d'acquisition d'images (10) selon une des revendications précédentes,
**caractérisé en ce**
**que** l'élément d'actionnement (60) fait passer l'élément de protection (22) de sa position fermée (la) dans sa position ouverte (IIa) et un dispositif de réception (21.2) de l'unité de caméra mobile (21) peut être commandé par l'élément d'actionnement (60).

6. Système d'acquisition d'images (10) selon une des revendications précédentes,
**caractérisé en ce**
**que** le premier élément d'actionnement (60) actionne l'élément de protection (22) et le deuxième élément d'actionnement (60) sert à un changement de position de l'unité de caméra (21) d'une position de repos (IIb) dans une position d'enregistrement (Ib), le dispositif de réception (21.2) de l'unité de caméra (21) pouvant aussi être commandé par le deuxième élément d'actionnement (60), un troisième élément d'actionnement (60) étant en particulier prévu pour commander le dispositif de réception (21.2) non seulement dans une dimension, mais aussi dans une deuxième dimension.

7. Système d'acquisition d'images (10) selon une des revendications précédentes,
**caractérisé en ce**
**que** l'élément de protection (22) et/ou l'unité de caméra mobile (21) sont sollicités par ressort de telle façon que la force du ressort permette de faire passer l'élément de protection (22) de sa position ouverte (IIa) dans sa position fermée (la) et/ou l'unité de caméra (21) de sa position d'enregistrement (Ib) dans la position de repos (IIb).

8. Système d'acquisition d'images (10) selon une des revendications précédentes,
**caractérisé en ce**
**que** le mécanisme (23) servant à actionner l'élément de protection (22) présente un mécanisme à genouillère, de sorte que dans la position fermée (la), l'élément de protection (22) ne peut pas être actionné de l'extérieur.

9. Système d'acquisition d'images (10) selon une des revendications précédentes,
**caractérisé en ce**
**que** l'élément d'actionnement (60) est un câble Bowden (61), une tige de poussée et/ou une tige tournante (62), un engrenage, une courroie crantée, une chaîne ou analogue, l'élément d'actionnement (60, 61) étant en particulier réalisé de manière flexible.

10. Système d'acquisition d'images (10) selon une des revendications précédentes,
**caractérisé en ce**
**que** l'élément de protection (22) est réalisé d'une seule pièce sous la forme d'un couvercle ou d'un volet ou que l'élément de protection (22) est réalisé en plusieurs parties, en particulier sous la forme d'un obturateur à lamelles ou central ou d'un obturateur à volet roulant.

11. Système d'acquisition d'images (10) selon une des revendications précédentes,
**caractérisé en ce**
**que** l'élément de protection (22) est monté dans un guide en forme de fente devant la lentille (21.1) de l'unité de caméra (21).

12. Système d'acquisition d'images (10) selon une des revendications précédentes,
**caractérisé en ce**
**que** le mécanisme (23) fait passer l'élément de protection (22) de sa position ouverte (IIa) dans sa position fermée (la) au moyen d'un mouvement de translation et/ou de rotation, la séquence de mouvement pouvant en particulier être divisée en différentes phases qui se différencient par leur type de mouvement.

13. Système d'acquisition d'images (10) selon une des revendications précédentes,
**caractérisé en ce**
**que** le deuxième module (40) est disposé à une distance notable du premier module (20), la distance étant supérieure à 5 centimètres, de préférence supérieure à 10 ou 20 centimètres.

14. Système d'acquisition d'images (10) selon une des revendications précédentes,
**caractérisé en ce**
**qu'**un élément de commande (25) et/ou un cylindre de fermeture mécanique sont disposés à côté de l'unité de caméra (21), lesquels sont également placés de manière à être protégés de l'extérieur lorsque l'élément de protection (22) est dans la position fermée (la), l'élément de commande (25) étant en particulier un élément de commutation électrique comme par exemple un bouton-poussoir, un commutateur, un élément piézoélectrique ou analogue.

15. Système d'acquisition d'images (10) selon une des revendications précédentes,
**caractérisé en ce**
**qu'**un détecteur de proximité (29) est prévu sur ou dans le premier module (20), au moyen duquel l'approche de personnes et/ou d'objets est détectable.
